# EUROPEAN PATENT SPECIFICATION

(11) **EP 0 764 560 B1**
(45) Date of publication and mention of the grant of the patent: **22.03.2000**
(21) Application number: 96202463.4
(22) Date of filing: 04.09.1996
(51) Int. Cl.: B60Q 1/30

(54) **Lighting armature for a vehicle**
Beleuchtungsarmatur für ein Fahrzeug
Armature d'éclairage pour un véhicule

(30) Priority: 13.09.1995 NL 1001182
(43) Date of publication of application: 26.03.1997
(73) Proprietor: Felua-groep, 7300 AP Apeldoorn (NL)
(72) Inventor: Berghuis, Koert, 1274 HT Huizen (NL); Monteny, Jacob Albert, 7321 JE Apeldoorn (NL)
(74) Representative: Dokter, Hendrik Daniel

(56) References cited:
- FR-A- 1 128 080
- US-A- 3 541 321
- US-A- 3 691 366

## Description

The invention relates to a lighting armature for a vehicle, comprising an elongate carrier which bears at least one lamp holder, which lamp holder is arranged movably along the carrier in lengthwise direction thereof between an extended position in which the lamp holder is situated substantially lengthwise outside the carrier and a retracted position in which the lamp holder is situated substantially lengthwise inside the carrier, said carrier comprising a guide channel in which the lamp holder is movably received.

From US-A-3691366 a lighting armature is known, which is intended to be mounted against the rear side of a vehicle. This armature comprises a structural assembly having a central tubular section telescopingly mounting two longitudinally extending members that are ajusted for attachment at the outward ends thereof to a vehicle. Coiled power cords for lights fastened to the tubular section and the telescoping member facilitate extension and retraction of the telelesoping members without snagging.

US-A-3541321, which is used to delimitate claim 1, discloses a light fixture suitable to be supported between two vertical members such as two joists of a building or two frame members of a truck. The fixture is made up of two telescoping frame chassis members that may be extended relative to each other and locked in a fixed position.

These known armatures are not suitable to be arranged for instance on a luggage rack, in particular a cycle rack, which is fixed to a towing hook on the rear side of an automobile. The armature should then serve to replace the rear lighting which is present on the automobile itself and which is hidden from view by the luggage rack and luggage loaded thereon.

It is an object of the invention to provide a lighting armature which is light in weight, safe and durable, which can be stowed in a compact form, which can be fitted quickly and easily to a vehicle or a luggage rack fixed thereto and which can subsequently be removed quickly and easily and which is otherwise free of the drawbacks associated with known armatures and can be produced at a low price.

This object is achieved according to the invention with an armature of the type stated in the preamble wherein the guide channel comprises a substantially elongate plate provided on its two long sides with standing edges which in cross section have a substantially concave form on the mutually facing inner sides, and the lamp holder comprises a housing which is guidable with a bottom surface along the elongate plate and of which edges standing away from this bottom surface have in cross section a substantially convex form which is complementary to the concave form of the edges of the guide channel such that the edges of the housing are enclosed by the edges of the channel.

In such an armature the length of the armature is determined substantially by the length of the carrier when the armature is not fixed to a vehicle or a luggage rack thereon and when the lamp holder is in retracted position, as a result of which a very compact form of the armature is possible in the situation of said latter position.

An armature with such a guide channel has a very compact form in both the retracted and extended position of the lamp holder which is to a large extent enclosed as it were by the channel so that the armature is less sensitive to unintentional damage or malicious vandalism than the known armature. With a substantial part of the edges and with the bottom of the housing the lamp holder is in direct contact with the guide channel. Because this surface is comparatively large, the construction of the armature is exceptionally stable, particularly in relation to the weight thereof.

In one embodiment of an armature according to the invention with such a guide channel, the plate of this channel is provided with a holder, which holder preferably comprises a pair of elongate, mutually facing grooves extending in lengthwise direction of the plate for releasably arranging an elongate flat object, in particular a licence number plate.

In an advantageous embodiment of an armature with a guide channel according to the invention, this channel is obtained by extrusion of a plastic material and a lamp holder housing guidable in the guide channel is obtained by blow moulding or injection moulding of a plastic material.

In yet another embodiment of an armature according to the invention locking means are provided for securing the lamp holder in the extended position.

In a favourable embodiment with a guide channel with standing edges manufactured from plastic and a lamp holder housing manufactured from plastic, at least one convex edge of the housing contains a resilient finger obtained by blow moulding respectively injection moulding and the concave edge of the guide channel contains a hole corresponding therewith for locking the lamp holder in the extended position.

In order to enhance the safety and durability of an armature according to the invention the latter comprises a cable duct extending substantially parallel to the carrier.

It will be apparent that where in the foregoing reference is made to at least one lamp holder, in practical situations the armature according to the invention will carry two lamp holders such that in the extended position these lamp holders are situated on either side of the carrier.

The invention will be further elucidated hereinbelow on the basis of an embodiment, with reference to the annexed drawings.

In the drawings:
Fig. 1a shows a lighting armature according to the invention with two lamp holders in extended position,
Fig. 1b shows the lighting armature of Fig. 1a with the lamp holders in retracted position,
Fig. 2a shows a detail of Fig. 1a in longitudinal section,
Fig. 2b shows a detail of Fig. 1b in longitudinal section, and
Fig. 3 shows a cross section through the armature of Fig. 1b.

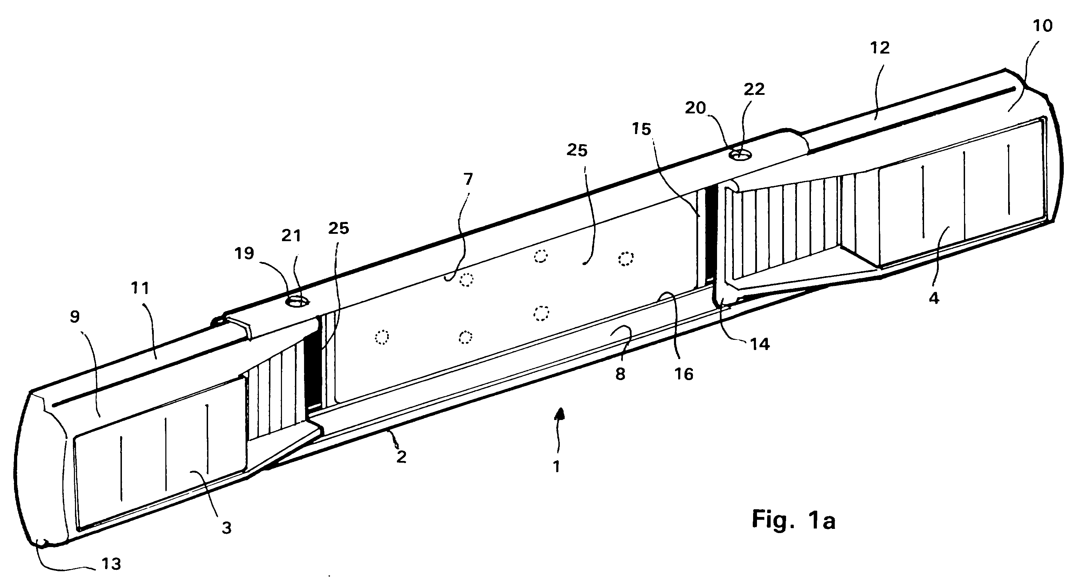

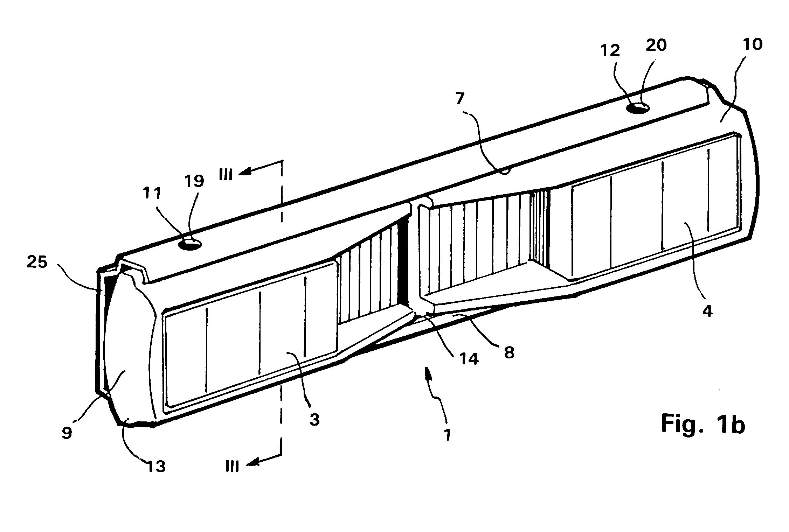

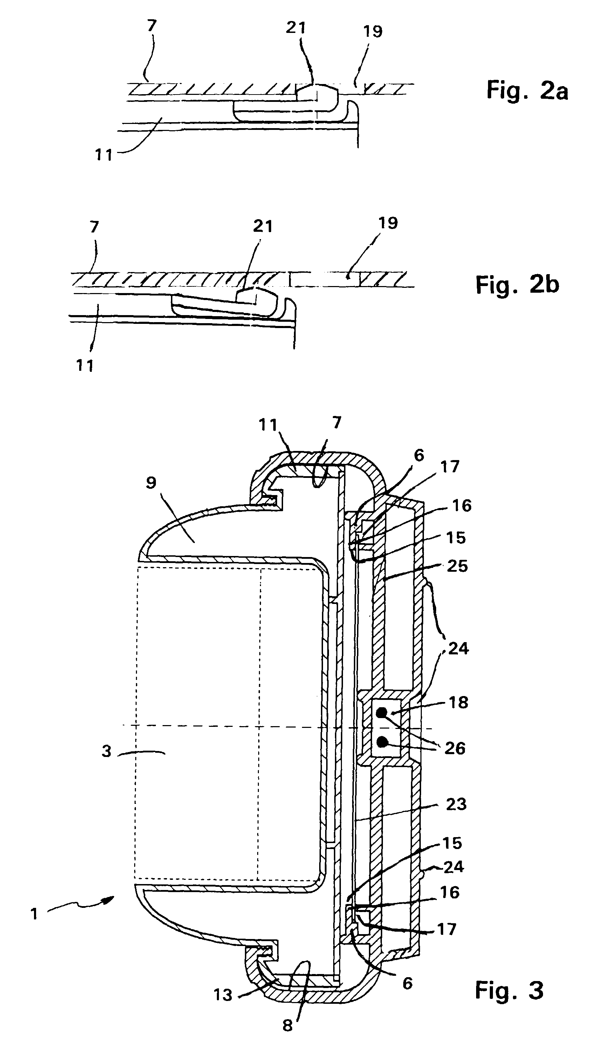

Fig. 1a shows a lighting armature 1 with a guide channel 2 in which are received two lamp holders 3,4 which are situated in the extended position. Guide channel 2 is formed by a flat plate 25 which is provided on the long sides with standing edges 7,8 which in cross section have a concave form on the mutually facing inner sides. Edges 7 and 8 of channel 2 enclose respectively the edges 11,13 of the left-hand lamp holder housing 9 and the edges 12,14 of the right-hand lamp holder housing 10. A holder 6 formed on the flat plate 25 of channel 2 (shown in Fig. 3) comprises a rectangular recess 15 which extends in lengthwise direction and the longitudinal edges 16 of which are each provided with a groove 17 (shown in Fig. 3), into which grooves a licence number plate can slide. The guide channel 2 is made by extrusion of a hard, impact-resistant and durable plastic, for instance Sinkral B32 E, an ABS plastic. The lamp holder housings 9,10 are made by injection moulding from a softer plastic material, for instance Sinkral B32, an ABS plastic. This choice of materials and production techniques makes it possible to arrange holes 19,20 in simple manner in the channel edge and resilient fingers 21,22 in the lamp holders 3,4 which in mutual co-action secure the lamp holders 3,4 in their respective housings 9,10 in the extended position.

Fig. 1b shows the armature 1 of fig. 1a with both lamp holders 3,4 in retracted position; the reference numerals in this figure correspond with those in fig. 1a. Fig. 1b shows clearly that the armature with both lamp holders 3,4 in retracted position has a very compact form since the lamp holders 3,4 are pushed so far inward into their housings 9,10 that the length of armature 1 is practically determined by the length of guide channel 2. Both lamp holder housings 9,10 are pushed to a large extent over the recess 15 of holder 6 against a stop (not shown). The resilient fingers of both lamp holder housings 9,10 are pushed under the edge 7 of guide channel 2 so that the convex edges 11,12 of the respective housings 9,10 are visible through the holes 19,20 in channel edge 7.

Fig. 2a shows in detail the resilient finger 21 of the left-hand lamp holder housing 9 in longitudinal section in the situation as according to fig. 1a, in which the lamp holder housing 9 is fully extended (to the left). The figure shows how the resilient finger 21 on the edge 11 of the housing abuts the left-hand side of opening 19 in channel edge 7 when an attempt is made to move the housing 9 with edge 11 further to the left.

Fig. 2b shows in detail the resilient finger 21 of the left-hand lamp holder housing 9 in longitudinal section in a situation in which lamp holder housing 9 is fully (as according to fig. 1b) or partially retracted (to the right). The figure shows how the resilient finger 21 on the edge 11 of the housing is pressed in and has disappeared under the edge 7 of guide channel 2.

Fig. 3 shows a cross section along the line III-III of the armature in fig. 1b. Corresponding components are designated with corresponding reference numerals. The figure shows how the holder 6 formed on the flat plate 25 bounds a recess 15, in the longitudinal edges 16 of which are recessed longitudinal grooves 17 for receiving a licence number plate 23. The figure further shows a cable duct 18 with cables 26 formed in support plate 25 and fixing points 24 for a luggage rack (not shown) on which the armature is fitted in this embodiment.

## Claims

1. Lighting armature (1) for a vehicle, comprising an elongate carrier (2) which bears at least one lamp holder (3, 4), which lamp holder (3, 4) is arranged movably along the carrier (2) in lengthwise direction thereof between an extended position in which the lamp holder (3, 4) is situated substantially lengthwise outside the carrier (2) and a retracted position in which the lamp holder (3, 4) is situated substantially lengthwise inside the carrier (2), said carrier comprising a guide channel (2) in which the lamp holder (3, 4) is movably received, the guide channel (2) comprising a substantially elongate plate (25) provided on its two long sides with standing edges (7, 8), **characterized in that** the standing edges have in cross section a substantially concave form on the mutually facing inner sides, and the lamp holder (3, 4) comprises a housing (10) which is guidable with a bottom surface along the elongate plate (25) and of which edges (11, 12, 13, 14) standing away from this bottom surface have in cross section a substantially convex form which is complementary to the concave form of the edges (7, 8) of the guide channel (2) such that the edges (11, 12, 13, 14) of the housing (10) are enclosed by the edges (11, 12, 13, 14) of the channel (2).

2. Lighting armature (1) as claimed in claim 1, **characterized in that** the plate (25) of the guide channel (2) is provided with a holder (6) for a flat object (23).

3. Lighting armature (1) as claimed in claim 2, **characterized in that** the holder (6) comprises a pair of elongate, mutually facing grooves (17) extending in lengthwise direction of the plate (25) for releasably arranging an elongate flat object, in particular a licence number plate (23).

4. Lighting armature (1) as claimed in any of the claims 1-3, **characterized in that** the guide channel (2) is obtained by extrusion of a plastic material.

5. Lighting armature (1) as claimed in any of the claims 1-4, **characterized in that** the housing (10) is obtained by blow moulding of a plastic material.

6. Lighting armature (1) as claimed in any of the claims 1-4, **characterized in that** the housing (10) is obtained by injection moulding of a plastic material.

7. Lighting armature (1) as claimed in any of the foregoing claims, **characterized by** locking means (19, 20, 21, 22) for securing the lamp holder (3, 4) in the extended position.

8. Lighting armature (1) as claimed in claim 5 respectively 6, **characterized in that** at least one convex edge (11, 12) of the housing (10) contains a resilient finger (21, 22) obtained by blow moulding respectively injection moulding and the concave edge (7) of the guide channel (2) contains a hole (19, 20) corresponding therewith for locking the lamp holder (3, 4) in the extended position.

9. Lighting armature (1) as claimed in any of the foregoing claims, **characterized in that** this comprises a cable duct (18) extending substantially parallel to the carrier (2).

10. Lighting armature (1) as claimed in any of the foregoing claims, **characterized in that** the carrier (2) bears two lamp holders (3, 4) such that in the extended position these lamp holders (3, 4) are situated on either side of the carrier (2).

## Patentansprüche

1. Beleuchtungsarmatur (1) für ein Fahrzeug, bestehend aus einem länglichen Träger (2), der mindestens eine Lampenhalterung (3,4) trägt, und diese Lampenhalterung (3,4) ist beweglich in länglicher Richtung entlang dem Träger (2) angebracht, zwischen einer ausgefahrenen Position, in welcher die Lampenhalterung (3, 4) im Wesentlichen längs außerhalb des Trägers (2) sitzt, und einer eingefahrenen Position, in der die Lampenhalterung (3, 4) im Wesentlichen längs innerhalb des Trägers (2) sitzt, und sich dadurch auszeichnet, dass besagter Träger aus einer Führungsschiene (2) besteht, welche die Lampenhalterung (3, 4) beweglich aufnimmt, und dass die Führungsschiene (2) im Wesentlichen besteht aus einer länglichen Platte (25), die an ihren beiden Längsseiten stehende Kanten hat (7, 8), **dadurch gekennzeichnet**, dass die stehenden Kanten im Querschnitt im Wesentlichen konkav geformt auf den sich zugewandten inneren Seiten sind, und die Lampenhalterung (3, 4) aus einem Gehäuse (10) besteht, welches mit seinem Unterboden entlang der länglichen Platte (25) geführt werden kann und dessen Kanten (11, 12, 13, 14), die von diesem Unterboden abstehen, im Querschnitt im Wesentlichen konvex geformt sind, und diese Form passt zu der konkaven Form der Kanten (7, 8) der Führungsschiene (2), so dass die Kanten (11, 12, 13, 14) des Gehäuses (10) von den Kanten (11, 12, 13, 14) der Führungsschiene (2) umschlossen werden.

2. Beleuchtungsarmatur (1) nach Anspruch 1, **dadurch gekennzeichnet**, dass die Platte (25) der Führungsschiene (2) mit einer Halterung (6) für flache Objekte (23) ausgestattet ist.

3. Beleuchtungsarmatur (1) nach Anspruch 2, **dadurch gekennzeichnet**, dass die Halterung (6) aus einem Paar länglichen sich zugewandten Nuten (17) besteht, welche sich in länglicher Richtung über die Platte erstrecken, zur nicht permanenten Anbringung eines länglichen flachen Objektes, insbesondere für Kraftfahrzeugkennzeichen (23).

4. Beleuchtungsarmatur (1) nach einem der Ansprüche 1-3 **dadurch gekennzeichnet**, dass die Führungsschiene (2) durch Extrusion (Strangpressen) von Kunststoff hergestellt wird.

5. Beleuchtungsarmatur (1) nach einem der Ansprüche 1-4, **dadurch gekennzeichnet**, dass das Gehäuse (10) durch Kunststoff-Blasformverfahren hergestellt wird.

6. Beleuchtungsarmatur (1) nach einem der Ansprüche 1-4, **dadurch gekennzeichnet**, dass das Gehäuse (10) durch Kunststoff-Spritzgussverfahren hergestellt wird.

7. Beleuchtungsarmatur (1) nach einem der obigen Ansprüche, **dadurch gekennzeichnet**, dass die Lampenhalterung (3, 4) in der ausgefahrenen Position gesichert ist mit Feststellmechanismen (19, 20, 21, 22).

8. Beleuchtungsarmatur (1) nach einem der Ansprüche 5 bzw. 6, **dadurch gekennzeichnet**, dass mindestens eine konvexe Kante (11, 12) des Gehäuses (10) einen federnden Finger (21, 22) hat, der durch Blasform- bzw. durch Spritzgussverfahren hergestellt wird, und dass die konkave Kante (7) der Führungsschiene (2) ein Loch (19, 20) hat, in welches der Finger passt, um die Lampenhalterung (3, 4) in der ausgefahrenen Position festzustellen.

9. Beleuchtungsarmatur (1) nach einem der obigen Ansprüche **dadurch gekennzeichnet**, dass sie einen Kabelkanal (18) enthält, der im Wesentlichen parallel zum Träger (2) verläuft.

10. Beleuchtungsarmatur (1) nach einem der obigen Ansprüche, **dadurch gekennzeichnet**, dass der Träger (2) zwei Lampenhalterungen (3, 4) trägt, so dass in der ausgefahrenen Position diese Lampenhalterungen (3, 4) auf beiden Seiten des Trägers (2) sitzen.

## Revendications

1. Armature d'éclairage (1) pour un véhicule, comprenant un support allongé (2) qui porte au moins un porte-lampe (3, 4), lequel porte-lampe (3, 4) est monté de manière mobile le long du support (2) en direction longitudinale de celui-ci entre une position "sorti" dans laquelle le porte-lampe (3, 4) est situé de manière essentiellement longitudinale à l'extérieur du support (2) et une position "rentré" dans laquelle le porte-lampe (3, 4) est situé de manière essentiellement longitudinale à l'intérieur du support (2), ledit support comprenant une coulisse de guidage (2) dans laquelle le porte-lampe (3, 4) est reçu de manière mobile, la coulisse de guidage (2) comprenant une plaque essentiellement allongée (25) pourvue sur ses deux grands côtés de bords relevés (7, 8), **caractérisée en ce que** les bords relevés ont une section transversale de forme essentiellement concave sur les côtés intérieurs se faisant mutuellement face, et le porte-lampe (3, 4) comprend un logement (10) qui peut être guidé avec une surface inférieure le long de la plaque allongée (25) et dont les bords (11, 12, 13, 14) éloignés de cette surface inférieure ont une section transversale de forme essentiellement convexe qui est complémentaire de la forme concave des bords (7, 8) de la coulisse de guidage (2), de sorte que les bords (11, 12, 13, 14) du logement (10) sont enfermés par les côtés (11, 12, 13, 14) de la coulisse (2).

2. Armature d'éclairage (1) suivant la revendication 1, **caractérisée en ce que** la plaque (25) de la coulisse de guidage (2) est pourvue d'un support (6) pour un objet plat (23).

3. Armature d'éclairage (1) suivant la revendication 2, **caractérisée en ce que** le support (6) comprend une paire de rainures allongées se faisant mutuellement face (17) s'étendant en direction longitudinale de la plaque (25) pour monter de manière amovible un objet plat allongé, en particulier une plaque de numéro d'immatriculation (23).

4. Armature d'éclairage (1) suivant l'une quelconque des revendications 1-3, **caractérisée en ce que** la coulisse de guidage (2) est obtenue par extrusion d'un matériau plastique.

5. Armature d'éclairage (1) suivant l'une quelconque des revendications 1-4, **caractérisée en ce que** le logement (10) est obtenu par moulage par soufflage d'un matériau plastique.

6. Armature d'éclairage (1) suivant l'une quelconque des revendications 1-4, **caractérisée en ce que** le logement (10) est obtenu par moulage par injection d'un matériau plastique.

7. Armature d'éclairage (1) suivant l'une quelconque des revendications précédentes, **caractérisée par** des moyens de blocage (19, 20, 21, 22) pour fixer le porte-lampe (3, 4) en position allongée.

8. Armature d'éclairage (1) suivant les revendications respectivement 5, 6, **caractérisée en ce qu**'au moins un bord convexe (11, 12) du logement (10) contient un doigt élastique (21, 22) obtenu par moulage respectivement par soufflage et par injection et le bord concave (7) de la coulisse de guidage (2) contient un trou (19, 20) correspondant pour bloquer le porte-lampe (3, 4) dans la position allongée.

9. Armature d'éclairage (1) suivant l'une quelconque des revendications précédentes, **caractérisée en ce que** celle-ci comprend un conduit de câble pour câbles (18) s'étendant d'une manière essentiellement parallèle au support (2).

10. Armature d'éclairage (1) suivant l'une quelconque des revendications précédentes, **caractérisée en ce que** le support (2) porte deux porte-lampes (3, 4) de sorte que dans la position allongée, ces porte-lampes (3, 4) sont situés de part et d'autre du support (2).
